# FASCICULE DE BREVET EUROPEEN

(11) **EP 4 065 501 B1**
(45) Date de publication et mention de la délivrance du brevet: **04.12.2024**
(21) Numéro de dépôt: 20775896.2
(22) Date de dépôt: 29.09.2020
(51) Int. Cl.: B66C 1/24, B66C 13/08, B65G 7/08

(54) **DISPOSITIF STABILISÉ POUR RETOURNER DES PIÈCES LOURDES OU ENCOMBRANTES**
STABILISIERTE VORRICHTUNG ZUM WENDEN VON SCHWEREN ODER SPERRIGEN TEILEN
STABILIZED DEVICE FOR TURNING OVER HEAVY OR BULKY PARTS

(30) Priorité: 29.11.2019 FR 1913463
(43) Date de publication de la demande: 05.10.2022
(73) Titulaire: Societe d'Applications Electriques et Mecaniques SAPEM, 58270 Cizely (FR)
(72) Inventeur: ARCHER, Joel, 58110 ROUY (FR); PANCHOUT, Mylène, 58330 SAINT BENIN DES BOIS (FR); DE SOUSA, Florian, 58180 MARZY (FR)
(74) Mandataire: LLR
(86) Numéro de dépôt international: PCT/EP2020/077231
(87) Numéro de publication internationale: WO 2021/104720

(56) Documents cités:
- CN-U- 204 211 370
- FR-A1- 2 904 300
- JP-U- S50 104 378
- NL-A- 1 040 748

## Description

La présente invention se rapporte au domaine de la manutention d'objets à l'aide de mécanismes de levage, par exemple avec l'aide d'un pont roulant. Elle se rapporte notamment au basculement de charges ayant des dimensions et/ou un poids important.

La demande de brevet publiée sous le numéro FR 2 904 300 A1, au nom de la Société d'Applications Electriques et Mécaniques (SAPEM), décrit une cale pour le basculement de charges lourdes et encombrantes. De telles cales sont couramment utilisées dans les ateliers pour le retournement de bobines de feuillard métallique avec l'aide d'un pont roulant ou d'un palan. Une telle cale, associée à un dispositif d'élingage approprié, simplifie le basculement, évite d'endommager la bobine et améliore la sécurité de l'opérateur chargé de l'opération. Le profil de la cale permet d'engager le basculement dès que l'on y appuie la bobine, éliminant ainsi tout effet de coup de fouet.

De telles cales de retournement ne sont pas limitées à la manipulation de bobines de feuillard. Elles permettent aussi de basculer d'autres types de charges, par exemple d'un angle de quatre-vingt-dix degrés.

Cependant, c'est parce qu'elles sont faites pour basculer sous le propre poids de la charge qu'elles sont instables. Pour des charges très lourdes, par exemple de dix ou vingt tonnes, cette instabilité peut être dangereuse, tant que la charge n'est pas parfaitement en place sur la cale.

JP-S-50104378U divulgue une cale selon le préambule de la revendication 1.

Le but de l'invention, est de proposer un outillage qui permette d'assurer que le basculement ne commence pas avant que la pièce à basculer soit correctement disposée.

Pour résoudre ce problème l'invention propose une cale pour basculer une charge d'avant en arrière, depuis une position de chargement, qui comprend :
- un corps ayant une bande de roulement conçue pour permettre audit corps d'y rouler sur un sol ;
- des moyens pour immobiliser la cale dans la position de chargement ; et ;
- des moyens de taquet solidaires du corps et disposés de sorte que dans la position de chargement lesdits moyens de taquets sont disposés au-dessus d'une partie saillante de la charge.

La partie saillante peut être une partie rapportée sur ladite charge. Les moyens de taquet peuvent comprendre un taquet amovible prévu pour être solidarisé avec le corps lorsque la charge est sur ladite cale, dans la position de chargement.

La cale peut comprendre une jambe mobile et les moyens pour immobiliser la cale comprendre des moyens pour bloquer de façon amovible cette jambe relativement au corps, de sorte que dans la position de chargement une première extrémité de la jambe repose au sol à l'arrière de ladite bande de roulement.

La cale peut comprendre une jambe mobile et les moyens pour immobiliser la cale comprendre des moyens pour bloquer de façon amovible cette jambe de sorte que dans la position de chargement une extrémité de la jambe est solidarisée de façon amovible, par les moyens de blocage, avec une chape solidaire du sol, à l'arrière de ladite bande de roulement.

La jambe est de préférence montée en rotation autour d'un axe porté par le corps, cet axe étant de préférence perpendiculaire à un plan de basculement.

Les moyens de blocage comprennent avantageusement une clavette.

L'invention porte aussi sur un procédé pour basculer une charge qui comprend les étapes suivantes :
- fournir une cale selon l'invention ;
- mettre la cale dans la position de chargement ;
- immobiliser la cale dans sa position de chargement, à l'aide de moyens de blocages ;
- poser la charge sur la cale ;
- libérer la cale des moyens de blocages ; et,
- basculer ladite charge.

L'étape pour libérer la cale des moyens de blocages comprend avantageusement une étape pour soulever la charge de sorte que la partie saillante de la charge rentre en contact avec les moyens de taquet.

Plusieurs modes d'exécution de l'invention seront décrits ci-après, à titre d'exemples non limitatifs, en référence aux dessins annexés dans lesquels :
La figure 1 est une vue schématique et en élévation, de profil, d'un premier mode de réalisation pour une cale selon l'invention, dans une position initiale avant son basculement ; et,
La figure 2 est une vue de la cale de la figure 1, lorsqu'elle est en cours de basculement ; et,
La figure 3 est une vue similaire à celle de la figure 1, d'un deuxième mode de réalisation pour une cale selon l'invention, dans une position initiale avant son basculement.

Les termes arrière et avant s'appliquent arbitrairement à ce qui est respectivement dessiné aux figures à gauche et droite de la feuille.

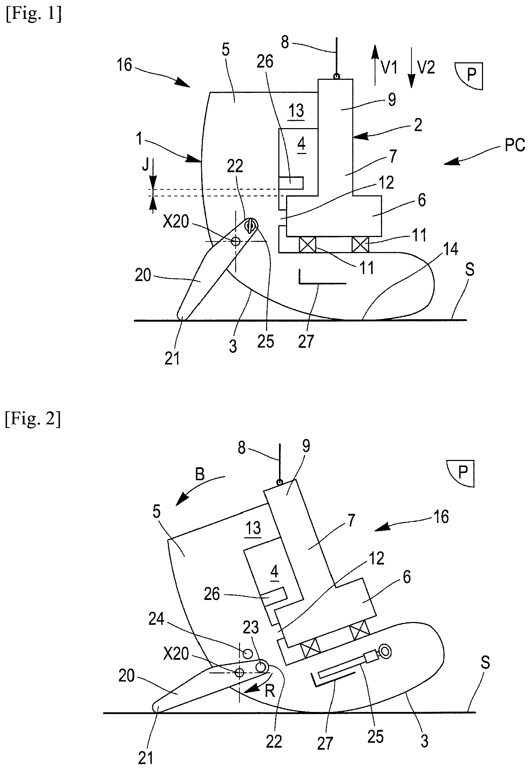

La figure 1 illustre un premier mode de réalisation pour une cale 1 selon l'invention, adaptée au basculement d'une charge 2 à quatre-vingt-dix degrés.

Dans l'exemple illustré, la charge 2 a un profil en forme de « T » renversé. La barre transversale du « T » forme une base 6, de section rectangulaire. Dans la position initiale, appelée « position de chargement » PC, illustrée à la figure 1, cette base 6 est sensiblement horizontale. La barre verticale du « T » forme une paroi 7 qui, dans la position de la figure 1, s'étend verticalement vers le haut, sensiblement depuis le milieu de la base 6. Des moyens d'élingage 8, disposés à une extrémité supérieure 9 de la paroi 7, permettent de manipuler la charge 2, par exemple à l'aide d'un pont roulant ou d'une grue.

Dans l'exemple illustré, la cale 1 comprend un corps 5 en forme de « L ». Sur sa partie extérieure, le corps 5 comprend une bande de roulement 3 courbe qui lui permet de rouler sur un sol S au cours d'un basculement B en arrière, ici de la droite vers la gauche de la figure. La partie intérieure de la cale 1 forme, entre les deux barres du « L », un logement 4 pour la charge 2.

Le plan de la feuille sur lesquelles les figures sont représentées constitue un plan de basculement P, c'est-à-dire que le basculement est réalisé parallèlement au plan P de la feuille, autour d'un axe instantané perpendiculaire au plan P.

La cale comprend en outre, dans le logement 4, deux socles 11 sur lesquels la charge 2 est posée. Dans la position initiale de la figure 1, les socles 11 reprennent entièrement le poids de la charge 2. La cale comprend aussi, dans le logement 4, deux butées latérales 12, 13 : une première butée latérale 12 contre laquelle la base 6 vient prendre appui et une deuxième butée latérale 13 contre laquelle l'extrémité supérieure 9 de la paroi 7 vient prendre appui. Dans la position initiale de la figure 1, les cales 12, 13 permettent de positionner la charge de sorte que le centre de gravité de l'ensemble 16 « cale plus charge » soit convenablement déporté par rapport à un appui 14 de la cale sur le sol S, de façon à permettre le basculement de l'ensemble 16 sous son poids propre. Au cours du basculement B, les cales 12, 13 reprennent progressivement le poids de la charge 2. Dans une position, non représentée, dans laquelle la charge a été basculée de quatre-vingt-dix degrés, les cales 12, 13 reprennent entièrement le poids de la charge 2.

La cale 1 comprend en outre une jambe 20 qui s'étend vers l'extérieur, vers l'arrière, au-delà de la bande de roulement 3. La jambe est montée mobile en rotation R relativement au corps 5 autour d'un axe X20 porté par le corps 5. L'axe X20 est sensiblement perpendiculaire au plan de basculement P.

Dans la position de chargement PC de la figure 1, la jambe 20 est bloquée en rotation. Une première extrémité 21 de la jambe repose sur le sol S, de sorte que la jambe, ainsi bloquée, s'oppose au basculement de l'ensemble 16 vers l'arrière.

Une deuxième extrémité 22 de la jambe 20, opposée et disposée au-delà de l'axe X20 relativement à la première extrémité 21, comprend un orifice 23 (voir figure 2). Un alésage 24, visible à la figure 2, est formé dans le corps 4. Il et disposé de sorte que dans la position de blocage illustrée à la figure 1, l'orifice 23 soit en vis-à-vis avec l'alésage 24. Dans l'exemple illustré, la cale comprend en outre une clavette 25. L'orifice 23, l'alésage 24 et la clavette 25 forment ensemble des moyens de blocage 23-25 pour la jambe 20. Ainsi, comme illustré à la figure 1, lorsque la clavette est introduite simultanément dans l'orifice 23 et dans l'alésage 24, la jambe 20 est immobilisée relativement au corps 5.

La cale comprend en outre un taquet 26, fixé au corps 5. Dans la position initiale illustrée à la figure 1, ce taquet est disposé au-dessus de la base 6 de la charge. Un jeu J est formé au-dessus de la base 6 et sous le taquet 26, entre la base et le taquet. Ce jeu J est faible au regard des dimensions de la cale ; il est suffisant pour pouvoir aisément glisser la base 6 sous le taquet 26. Il est de préférence voisin de dix millimètres.

Dans la position de blocage et chargement PC illustrée à la figure 1, le corps ayant tendance à basculer vers l'arrière, il exerce sur la clavette 25 un effort de cisaillement qui en empêche le retrait. Pour libérer la clavette, et pouvoir basculer le corps, on soulève verticalement la charge 2 selon la direction V1, de sorte que sa base 6 vienne en contact avec le taquet 26, tendant ainsi à soulever le corps 5. Ainsi soulagée des efforts qui la contraignaient, la clavette 25 peut être retirée. Une fois la clavette retirée, la charge 2 est rabaissée verticalement selon la direction V2 et reposée sur les socles 11.

Un rangement 27 est avantageusement prévu sur un flan de la cale 1, afin d'y ranger la clavette lorsqu'elle est retirée, comme illustré à la figure 2.

La clavette étant retirée, la jambe 20 est libre en rotation R autour de son axe X20. Ainsi, comme illustré à la figure 2, une fois la charge rabaissée selon la direction V2 et reposant de nouveau sur ses socles 11, l'ensemble 16 bascule vers l'arrière selon B. Simultanément, la jambe 20, dont la première extrémité 21 glisse vers l'arrière sur le sol S, tourne autour de son axe X20 selon R.

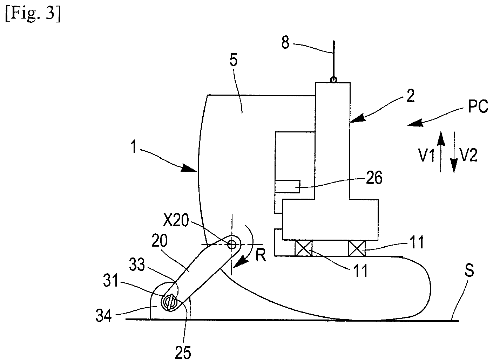

On va maintenant décrire un deuxième mode de réalisation pour une cale 1 selon l'invention, en référence à la figure 3, essentiellement en ce qu'il diffère du premier mode de réalisation illustré aux figure 1 et 2.

Comme dans le premier mode de réalisation, la cale 1 comprend une jambe 20 qui s'étend vers l'extérieur, vers l'arrière, au-delà de la bande de roulement 3. La jambe est montée mobile en rotation R relativement au corps 5 autour d'un axe X20 porté par le corps 5. L'axe X20 est sensiblement perpendiculaire au plan de basculement P.

Dans la position de chargement PC de la figure 3, la jambe 20 est bloquée en rotation. Une extrémité 31 de la jambe 20 comprend un orifice 33. Il y a en outre une chape 34 solidaire du sol S.

La cale comprend une clavette 25. L'orifice 23, la chape 34 et la clavette 25 forment ensemble des moyens de blocage 23-25 pour la jambe 20. Ainsi, comme illustré à la figure 3, lorsque la clavette est introduite simultanément dans l'orifice 23 et dans la chappe 34, la jambe 20 est immobilisée relativement au corps 5.

Comme dans le premier mode de réalisation, pour libérer la clavette, et pouvoir basculer le corps, on soulève verticalement la charge 2 selon la direction V1, de sorte que sa base 6 vienne en contact avec le taquet 26, tendant ainsi à soulever le corps 5. Ainsi soulagée des efforts qui la contraignaient, la clavette 25 peut être retirée. Une fois la clavette retirée, la charge 2 est rabaissée verticalement selon la direction V2 et reposée sur les socles 11.

La clavette étant retirée, la jambe 20 est libre en rotation R autour de son axe X20. Ainsi, une fois la charge rabaissée selon la direction V2 et reposant de nouveau sur ses socles 11, l'ensemble 16 bascule vers l'arrière.

Bien sûr, l'invention n'est pas limitée aux exemples qui viennent d'être décrits. Au contraire, l'invention est définie par les revendications qui suivent.

Il apparaîtra en effet à l'homme de l'art que diverses modifications peuvent être apportées aux modes de réalisation décrits ci-dessus, à la lumière de l'enseignement qui vient de lui être divulgué.

Ainsi, au lieu d'être mobile en rotation, la jambe peut être mobile en translation, un système d'encliquetage ou de clavette lui permettant de la maintenir dans la position déployée.

La cale peut comprendre un système de plots, cales et taquet différents selon la forme de la charge. En outre, pour une cale plus universelle, certains de ces plots, cales et taquet peuvent être amovibles, un jeu de ce système pouvant être adapté à une pièce particulière.

Lorsque la charge ne comprend pas d'extension latérale, telle la base précédemment décrite, susceptible de coopérer avec le taquet, il peut être prévu d'équiper cette charge d'une extension ad hoc.

Aussi, le taquet peut être amovible et rapporté après la mise en position de la charge sur la cale.

## Revendications

1. Cale (1) pour basculer (B) une charge (2) d'avant en arrière, depuis une position de chargement (PC), comprenant:
- un corps (5) ayant une bande de roulement (3) conçue pour permettre audit corps d'y rouler sur un sol (S) ;
- des moyens (23-25 ; 33,25) pour immobiliser la cale dans la position de chargement ;
**caractérisée en ce que** la cale comprend en outre:
- des moyens de taquet (26) solidaires du corps (5) et disposés de sorte que dans la position de chargement lesdits moyens de taquets sont disposés au-dessus d'une partie saillante (6) de la charge (2).

2. Cale (1) selon la revendication 1, **caractérisée en ce que** les moyens de taquet (26) comprennent un taquet amovible prévu pour être solidarisé avec le corps (5) lorsque la charge est sur ladite cale, dans la position de chargement.

3. Cale (1) selon l'une des revendication 1 et 2, **caractérisée en ce qu'**elle comprend une jambe (20) mobile et **en ce que** les moyens pour immobiliser la cale comprennent des moyens (23-25) pour bloquer de façon amovible ladite jambe relativement audit corps (5) de sorte que dans ladite position de chargement une première extrémité (21) de ladite jambe repose au sol (S) à l'arrière de ladite bande de roulement (3).

4. Cale (1) selon l'une des revendication 1 et 2, **caractérisée en ce qu'**elle comprend une jambe (20) mobile et **en ce que** les moyens pour immobiliser la cale comprennent des moyens (33,25) pour bloquer de façon amovible ladite jambe de sorte que dans ladite position de chargement une extrémité (21) de ladite jambe est solidarisée de façon amovible, par lesdits moyens de blocage, avec une chape (34) solidaire du sol (S), à l'arrière de ladite bande de roulement (3).

5. Cale (1) selon la revendication 4, **caractérisée en ce que** ladite jambe (20) est montée en rotation autour d'un axe (X20) porté par le corps (5), ledit axe étant de préférence perpendiculaire à un plan (P) de basculement.

6. Cale (1) selon l'une des revendications 4 et 5, **caractérisée en ce que** les moyens de blocage comprennent une clavette (35).

7. Procédé pour basculer (B) une charge (2), **caractérisé en ce qu'**il comprend les étapes suivantes :
- fournir une cale (1) selon l'une des revendications 1 à 6 ;
- mettre ladite cale dans la position de chargement ;
- immobiliser ladite cale dans sa position de chargement, à l'aide de moyens de blocages (23-25, 33,25) ;
- poser ladite charge sur ladite cale ;
- libérer ladite cale desdits moyens de blocages ; et,
- basculer ladite charge.

8. Procédé selon la revendication 7, **caractérisé en ce que** l'étape pour libérer la cale des moyens de blocages comprend une étape pour soulever la charge de sorte que la partie saillante (6) de la charge rentre en contact avec les moyens de taquet (26).

## Patentansprüche

1. Stabilisierungsvorrichtung (1) zum Kippen (B) einer Last (2) vor und zurück aus einer Ladeposition (PC), aufweisend:
- einen Körper (5) mit einer Lauffläche (3), die so gestaltet ist, dass der Körper auf einem Boden (S) darauf rollen kann;
- Mittel (23-25; 33,25), um die Stabilisierungsvorrichtung in der Ladeposition zu fixieren;
**dadurch gekennzeichnet, dass** die Stabilisierungsvorrichtung weiterhin aufweist:
- Klammermittel (26), die fest mit dem Körper (5) verbunden und so angeordnet sind, dass in der Ladeposition die Klammermittel über einem vorstehenden Teil (6) der Last (2) angeordnet sind.

2. Stabilisierungsvorrichtung (1) nach Anspruch 1, **dadurch gekennzeichnet, dass** die Klammermittel (26) eine abnehmbare Klammer aufweisen, die dazu vorgesehen ist, mit dem Körper (5) fest verbunden zu werden, wenn sich die Last auf der Stabilisierungsvorrichtung in der Ladeposition befindet.

3. Stabilisierungsvorrichtung (1) nach einem der Ansprüche 1 und 2, **dadurch gekennzeichnet, dass** er ein bewegliches Bein (20) aufweist und dass die Mittel zum Feststellen der Stabilisierungsvorrichtung Mittel (23-25) aufweisen, um das Bein in Bezug auf den Körper (5) lösbar zu blockieren, so dass in der Ladeposition ein erstes Ende (21) des Beines auf dem Boden (S) hinter der Lauffläche (3) ruht.

4. Stabilisierungsvorrichtung (1) nach einem der Ansprüche 1 und 2, **dadurch gekennzeichnet, dass** er ein bewegliches Bein (20) aufweist und dass die Mittel zum Feststellen der Stabilisierungsvorrichtung Mittel (33, 25) zum lösbaren Blockieren des Beines aufweisen, so dass in der Ladeposition ein Ende (21) des Beines durch die Mittel zum Blockieren lösbar mit einem mit dem Boden (S) fest verbundenen Gabelkopf (34) an der Rückseite der Lauffläche (3) verbunden ist.

5. Stabilisierungsvorrichtung (1) nach Anspruch 4, **dadurch gekennzeichnet, dass** das Bein (20) drehbar um eine vom Körper (5) getragene Achse (X20) montiert ist, wobei die Achse vorzugsweise senkrecht zu einer Kippebene (P) verläuft.

6. Stabilisierungsvorrichtung (1) nach einem der Ansprüche 4 oder 5, **dadurch gekennzeichnet, dass** die Mittel zum Blockieren einen Keil (35) aufweisen.

7. Verfahren zum Kippen (B) einer Last (2), **dadurch gekennzeichnet, dass** es die folgenden Schritte aufweist:
- Bereitstellen einer Stabilisierungsvorrichtung (1) nach einem der Ansprüche 1 bis 6;
- Bringen der Stabilisierungsvorrichtung in die Ladeposition;
- Feststellen der Stabilisierungsvorrichtung in der Ladeposition mit Hilfe von Mitteln zum Blockieren (23-25, 33,25);
- Abstellen der Ladung auf der Stabilisierungsvorrichtung;
- Lösen der Stabilisierungsvorrichtung von den Mitteln zum Blockieren; und,
- Kippen der Ladung.

8. Verfahren nach Anspruch 7, **dadurch gekennzeichnet, dass** der Schritt zum Lösen der Stabilisierungsvorrichtung von den Mitteln zum Blockieren einen Schritt zum Anheben der Last aufweist, so dass der vorstehende Teil (6) der Last mit den Klammermittel (26) in Berührung kommt.

## Claims

1. Wedge (1) for tilting (B) a load (2) from forth to back from a loading position (PC), including:
- a body (5) having a tread (3) designed to enable said body to roll on a ground (S);
- means (23-25 ; 33.25) to immobilise the wedge in the position of loading;
**characterised in that** the wedge further comprises:
- cleat means (26) integral with the body (5) and arranged so that in the loading position, said cleat means are arranged above a projecting part (6) of the load (2).

2. Wedge (1) according to claim 1, **characterised in that** the cleat means (26) comprise a removable cleat designed to be secured to the body (5) when the load is on said wedge, in the loading position.

3. Wedge (1) according to one of claims 1 and 2, **characterised in that** it comprises a movable leg (20) and **in that** the means for immobilising the wedge comprise means (23-25) for removably locking said leg relative to said body (5) so that in said loading position a first end (21) of said leg rests on the ground (S) to the rear of said tread (3).

4. Wedge (1) according to one of claims 1 and 2, **characterised in that** it comprises a movable leg (20) and **in that** the means for immobilising the wedge comprise means (33, 25) for removably locking said leg relative to said body so that in the said loading position one end (21) of said leg is removably connected, by said locking means, to a clevis (34) integral with the ground (S), to the rear of said tread (3).

5. Wedge (1) according to claim 4, **characterised in that** said leg (20) is mounted rotatable about an axis (X20) carried by the body (5), said axis preferably being perpendicular to a tilting plane (P).

6. Wedge (1) according to one of claims 4 and 5, **characterised in that** the locking means comprise a pin (35).

7. Method for tilting (B) a load (2), **characterised in that** it comprises the following steps:
- provide a wedge (1) according to one of claims 1 to 6,
- move the wedge into the loading position,
- immobilise the said wedge in its loading position, using locking means (23-25, 33,25),
- place said load on said wedge,
- releasing said wedge from said locking means, and
- tilting said load.

8. Method according to claim 7, **characterised in that** the step of releasing the wedge from the locking means comprises a step of lifting the load so that the projecting part (6) of the load comes into contact with the cleat means (26).
